# EUROPEAN PATENT APPLICATION

(11) **EP 2 541 481 A1**
(43) Date of publication of application: **02.01.2013**
(21) Application number: 11172298.9
(22) Date of filing: 01.07.2011
(51) Int. Cl.: G06Q 30/00

(54) **Personalized advertising**

(71) Applicant: TeliaSonera AB, 10663 Stockholm (SE)
(72) Inventor: Lehtonen, Rami, 37800 Toijala (FI); Kivirauma, Kimmo, 36100 Kangasala AS. (FI)
(74) Representative: Mikkola, Joni Juhani

(57) **Abstract**

The invention concerns personalized advertising especially in a field of Internet Protocol television (IPTV). The invention disclosed a method in which an advertisement comprising at least advertisement context and advertisement related data is delivered to a user in a personalized manner. The personalization is achieved by recognizing the user and based on the recognition and user preferences the advertisement to be delivered is selected. The user behavior in response to representation of the advertisement is monitored and analyzed and based on this the user preferences are updated. The invention concerns also a server, system and computer program product implementing the method.

## Description

### TECHNICAL FIELD

The invention concerns in general the technical field of Internet Protocol television (IPTV). Especially the invention concerns personalized advertising in an IPTV environment.

### BACKGROUND OF THE INVENTION

Advertisements are delivered to audience over many channels with a goal to deliver information on certain products or services to an audience and in that way direct the behavior of consumers. Advertising is an important area not only for product manufacturers and service providers, but also for media industry that takes care of the delivery of an advertisement to the consumers.

Traditional ways of advertising, such as promotional materials in paper form, are at least partly replaced by modern forms of advertisements. Such modern advertisements are delivered in electronic form to potential customers. Television but also Internet and mobile communication technology in general provide modern channels for reaching large audience in cost effective way.

Especially, the field of advertising in television has developed lately. Few main reasons for this development is that television has become more and more popular information channel, but also for the reason that the television technology has developed so that it enables even more impressive advertising methods. Some examples of development of television technology are the digitalization of television signal and 3D presentation technology.

Also the technologies delivering the television signal to end customers are developed. One major area of development is so called Internet Protocol television (lPTV). In IPTV the architecture and networking methods originates from lP (Internet Protocol) technology and the core idea is that television content is delivered via a computer network using said Internet Protocol. One advantage among others in lPTV is that lP-based platform allows significant opportunities to make the TV viewing more interactive and personalized.

The personalization of TV viewing with lPTV goes well along with the goal of advertisers in TV. It would be advantageous that a certain TV advertisement reaches primarily and at least its target group. Several approaches to gain this goal are introduced. One of the approaches is based on the idea that user preferences based on viewed/stored programs are stored locally on a digital television and a metadata attached to advertisements is used for matching the advertisements to be displayed with the stored user preferences. The advertisements matching with user's preferences are pre-stored locally on a digital television. Subsequently, the advertisements are displayed in the form of banners and in some cases related to the programs viewed by the user.

According to another approach advertisements to be delivered are associated with a selected television program. Such an implementation is based on an idea that certain programs are viewed by certain type of audience and for that specific audience certain advertisement are better than others. Also, some user profile creation is attached to such solutions so that a set-top box identifier corresponds to a certain user profile.

The drawbacks of the prior art solution are that they do not fully utilize the interactivity offered by IPTV technology. Moreover, they do not offer full identification of the user since they do not anyhow differentiate the actual user of the television and thus the personalization of TV advertisements cannot fully be implemented. Further, due to the fact that the advertisements are not fully personalized and not interactive it makes the users to start channel-hopping right away, when advertisement break starts.

### SUMMARY OF THE INVENTION

An objective of the invention is to present a method, a server, a system and a computer program product for arranging a sophisticated method for delivering personalized advertising to a user in a two-way digital communication system. Another objective of the invention is that the method, the server, the system and the computer program product for arranging interactive functionality of IPTV server provide a more sophisticated implementation of personalized advertising. Still further objective of the invention is that the method, the server, the system and the computer program product for arranging interactive functionality of IPTV server provide means for updating user preferences in an easy way.

The objectives of the invention are achieved by arranging a profiler database into the IPTV network and storing user related information there. The information is to be utilized in a context of advertising so that the user receives at least such advertisement context that interests him/her. The objectives of the invention are further achieved by updating the profiler database according to the user behavior in relation to at least the advertisement context.

A method according to the invention is characterised by the steps recited in the characterising part of the independent claim directed to a method.

A server according to the invention is characterised by the features recited in the characterising part of the independent claim directed to a server.

A system according to the invention is characterised by the features recited in the characterising part of the independent claim directed to a system.

A computer program product according to the invention is characterised by the features recited in the characterising part of the independent claim directed to a computer program product.

### SHORT DESCRIPTION OF THE INVENTION

The invention discloses a method for delivering personalized advertisements to a viewer or viewers in a two-way digital communication system. According to the method a user related identity information in a data flow received from a user end in the two-way digital communication system is recognized. By utilizing the user related identity information a user related data is inquired from a database. Based on the user related data personalized advertisements are selected among all advertisements and delivered to the viewer or viewers.

The method according to the invention comprises further aspects for updating at least information in relation to viewer preferences based on monitoring and analyzing user behavior in response to a representation of at least the advertisement context.

The invention also discloses a server for implementing the delivery of advertisement as well as for recognizing user related identity information. Additionally, the server is configured to inquire information from a profiler database storing information on viewer preferences. Furthermore, the server is configured to monitor and analyze user behavior in response to a representation of at least the advertisement context.

The invention also discloses a system for delivering an advertisement on a basis of user preferences and monitoring and analyzing user behavior with respect of the advertisement and updating user preferences in a database if needed.

The invention also discloses a computer program product comprising computer-executable instructions that when executed by processing means of a server, the server is configured to perform all the method steps disclosed herein.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

- Fig. 1: illustrates a simplified IPTV system,
- fig. 2a: illustrates a solution according to the current invention for delivering an advertisement in a two-way digital communication system,
- fig. 2b: illustrates an example of a data entry in a profiler database,
- fig. 3: illustrates a flow chart of a method for delivering personalized advertisements in a two-way digital communication system according to an embodiment of the invention, and
- fig. 4: illustrates an IPTV server 101 according to an embodiment of the invention.

### DETAILED DESCRIPTION OF THE INVENTION AND ITS ADVANTAGEOUS EMBODIMENTS

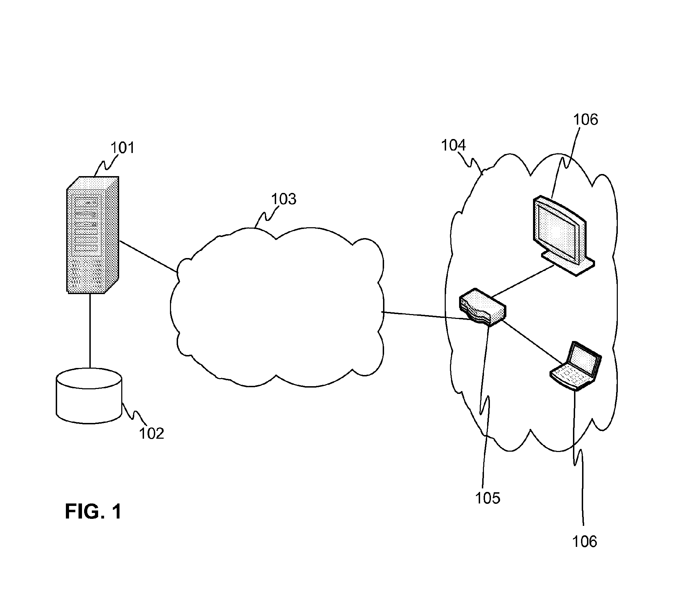

Figure 1 illustrates a simplified IPTV system. The core element of the IPTV solution is an IPTV server 101, which, among other tasks, takes care of the coordination of the IPTV traffic and the control of the customer interaction with the service. Furthermore, the I PTV server is a contact point for database elements 102 of different service providers in IPTV environment. Such service providers are e.g. content providers who, for instance, provide the TV programs to be distributed and/or video-on-demand (VoD) service providers. Additionally, the IPTV server 101 can deliver the electronic program guide (EPG) from the electronic program guide server. Also, security issues, like digital rights management, can be managed by I PTV server 101.

The IPTV server 101 is either directly or indirectly coupled to lP based network 103, such as to Internet. The lP network 103 provides the path from the lPTV server 101 to the end customer i.e. viewer. Physically, the transmission path can be implemented with variety of technologies and medium, such as optical fibers, different types of digital subscriber line (DSL) technologies or even wirelessly by utilizing some common wireless network technologies.

At user's end 104 there is a so called set-top box 105, which provides two-way communications on an lP network and decodes the video streaming media. Advantageously, lP set-top boxes 105 have a built in home network interface which can be for example Ethernet or one of the existing wire home networking technologies such as HomePNA, which provides a way to create a highspeed local area network using existing home wiring. If the communication towards lPTV server 101 is arranged wirelessly, the set-top box 105 comprises the necessary radio technology means for establishing the wireless connection and data transmission thereto. Typically, each set-top box 105 is equipped with an identifier for enabling the lPTV server 101 to direct specific media flow to that specific set-top box 105 and thus for a specific viewer. The identifier can be e.g. service provider specific, or content provider specific or in a preferred solution the set-top box may comprise an own lP address in lP network. In some instances the set-top box 105 identifier is static, while in other instances the set-top 105 identifier is dynamic thus changing from time to time. Additionally, the identifier can be a combination of the above mentioned identifier types, or the identifier can be exchangeable between the mentioned identifier types during the operation. In the following, the invention is described in relation to an own IP address for the set-top box, but the invention can utilize any other type of identifier in a similar way.

Here it is and will be discussed about two-way communication and two-way digital communication system. Even if it is mostly described such a technology in which the two-way communication is arranged in the same communication channel, it shall be understood in a broader way. For example, a solution in which a first data is transmitted over first data channel, e.g. lP network, and a second data is transmitted over a second data channel, e.g. mobile communication channel, belongs under the inventive idea described in the application.

Despite its name, a set-top box 105 need not be physically separate element in the IPTV structure, but may be implemented into the outputting device internally. Generally speaking, the set-top box 105 may be implemented, for example, as a circuit board, integrated circuit, set of integrated circuits, or software that is physically integrated with another element, such as with an outputting device.

The outputting devices 106 in the user end may comprise wide variety of terminals. Naturally, the typical device for outputting TV signal is traditional TV screen, but lately also computers have gained popularity as outputting devices for TV signal. Naturally, any user device, which is capable of displaying TV signal, can be used as an outputting device 106. The outputting devices receive the data to be outputted from the set-top box. Outputting devices 106 can also be equipped with an internal element, which is configured to perform similar functions as the set-top box. Naturally, in such a case the outputting device can directly be coupled to I PTV server over the lP network.

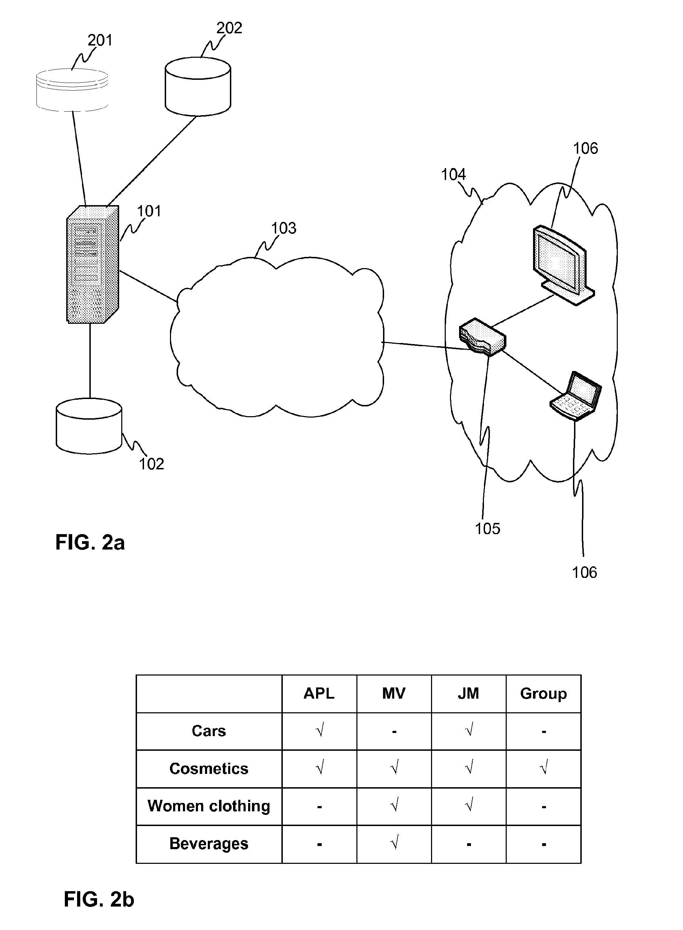

Figure 2a illustrates a solution according to the current invention for delivering an advertisement in a two-way digital communication system. The solution comprises the same elements as described in the context of Figure 1. Additionally, the solution according to the current invention comprises an advertisement server 201, which is coupled to the lPTV server either directly or indirectly. The advertisement server 201 is configured to store the advertisements.

The solution according to the invention comprises a profiler database 202, which comprises information on a viewer or viewers or a group of viewers. The information comprises at least an identifier for identifying the viewer or there can be common identifier to a group of viewers if necessary. Additionally, the profiler database 202 comprises such information on the viewer which can be utilized when selecting the advertisement to be delivered to the user. An example of such information is e.g. demographics of the viewer and / or user preferences in broader sense. According to the current invention the user preferences are updatable in the profiler database based on pre-defined criteria. The profiler database 202 can be a separate entity to the IPTV server and coupled into it. Alternatively, the profiler database 202 can be directly implemented in the IPTV server. It is also possible that the profiler database 202 can be directly implemented in the advertisement server. The profiler database may also comprise some processing means for implementing operations needed for analysis of information and/or communicating with respective other elements.

Figure 2b discloses an example of a data entry in a profiler database for a certain users according to the invention. Here it is considered that persons APL, MV and JM belong to a same family and each of the persons have their own desires and interest areas. For example, person APL is interested in cars and cosmetics and has indicated his preference to see advertisements in the mentioned areas. Persons MV and JM have indicated their preferences in a similar way. The information is stored in the profiler database. Additionally, the profiler database comprises a data field, which indicates their common desires, which is formed with a simple Boolean arithmetic i.e. if all persons are interested in the same categories, advertisements may be delivered in the common interest areas (right-hand column). Naturally, any sub-groups can be formed by the IPTV server during the operation as it may be necessary when e.g. only APL and MV are watching television at the same time. According to the invention the IPTV server inquires information from the profiler database and utilizes the information for matching advertisements to be delivered to TV viewer(s) in accordance of information in the profiler database. As can be seen from Figure 2b the data entry as a whole is very simple and does not require large amount of memory capacity, which is a great advantage of the current invention.

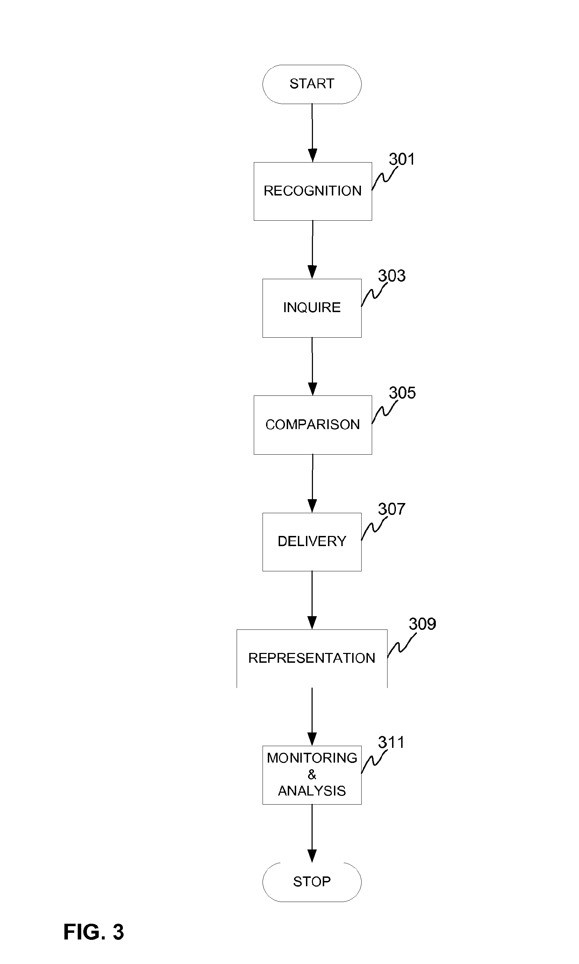

Figure 3 illustrates a flow chart of a method for delivering at least an advertisement context being part of an advertisement in addition to an advertisement related data indicating additional information on the advertisement in a two-way digital communication system according to the invention. In a first step of the invention an user related identity information is recognized 301 from a data flow received from a user end in the two-way digital communication system. The recognition 301 can be based on multiple solutions. According to an embodiment of the invention the user inserts a personal identification code, such as a personal identification number (PIN), to the outputting device for example by means of a remote controller. The PIN can represent only that specific TV viewer or alternatively there can be a common identifier for group of viewers, such as a family. It is also possible that each of the viewers have their own personal identifier, all of which are inserted to the outputting device and thus to the system. According to some other embodiments of the invention a viewer using his or her mobile terminal as a remote controller is identified by means of common identifiers known from mobile communication technology. Such an identifier is for example the international mobile subscriber identity (lMSl) identifying the subscriber identity module (SIM) and thus the user of the mobile terminal. In some other sophisticated embodiments of the invention the recognition of TV viewers is done by utilizing the camera, which is coupled to e.g. the outputting device and/or the set-top box. Such cameras are also common in e.g. lap-top computers. Additionally, some image recognition is needed for the recognition of the viewers around the outputting device. The recognition requires some input data to be inserted to the recognition system, such as some image of the users of the outputting device so that the recognition system has some data to be used in comparison of the viewers on a specific instance to the images stored in the recognition system. Camera based viewer recognition is preferred in use since it does not require any actions from viewers when starting the viewing of TV. As indicated, some pre-setting is needed when e.g. inserting the pre-data to the recognition system. Any other viewer(s) recognition method can be used and for clarity reasons, in the following description it is referred to such recognition in which some identifier is transmitted further to the system over the set-top box, but also other ways of transmitting an user related identity information are possible, e.g. utilizing a mobile terminal and the mobile communication network into which the mobile terminal is connected to. In any case, the recognition method is advantageously agreed in advance and can depend on the device over which the user related identity information is to be delivered.

The identifier of the viewer is transmitted to the set-top box and further to the IPTV server by utilizing the two-way communication channel. According to an embodiment the identifier is transmitted to IPTV server over IP network, such as Internet. In another embodiment the user related identity information is transmitted at least partly wirelessly to the lPTV server, if the set-top box is provided with necessary functionalities for wireless communication. According to an further embodiment of the invention the identifier of the viewer is delivered to the lPTV server together with the identifier of the set-top box.

As indicated the user related identity information may be received directly from the user, e.g. a PIN code, or the information is derivable from the data flow from the user end, e.g. image captured from the user(s). The user end shall be understood as a broad concept comprising any device and / or system under direct or indirect control of the user by means of which the user is capable of transferring user related identity information either directly or indirectly.

The lPTV server is configured, according to an embodiment of the invention, to recognize 301 a user related identity information in a data flow received from a user end of the two-way digital communication system and inquire 303 a user related data from a database by utilizing the user related identity information. Based on the user related identity information a user profile is found from the profiler database and thus the information relating to user preferences. By means of the information from the profiler database the lPTV server is configured to match advertisements to be delivered to the viewer.

The advertisement according to the invention comprises at least the advertisement context, i.e. advertisement information itself, and advertisement related data, i.e. i.e. additional data comprising additional information relating to the advertisement. The matching of the advertisements to be delivered to the viewer is performed by comparing 305 the information received from the profiler database with the advertisement related data. According to an embodiment of the invention a merging of the advertisement related data to the advertisement media flow is implemented in such a manner that information on the type of the advertisement is included e.g. into the beginning of the media flow. In such an embodiment it is possible to filter the not interesting advertisements from interesting advertisements in the lPTV server and deliver only interesting ones to the user. According to some other embodiments of the invention the advertisement comprises additional data relating to the advertisement i.e. so called metadata, which is to be used for comparison of the advertisement related data with the user related data received from the database indicating the user preferences. More specifically, comparison is done by comparing data included in the metadata with the data received from the profiler database. The data items to be used in comparison are agreed beforehand and can be based on e.g. a simple number string indicating the mentioned information. Moreover, in some embodiments of the current invention the metadata comprises information on the category of the advertisement into which it belongs to. An example of the category can be an area of 'Cars' as shown in Figure 2b. Similar category division is arranged into the profiler database and thus if the information in the profiler database indicates that a specific viewer desires to get advertisements relating to 'Cars', such advertisements are delivered to him/her by the IPTV server. More sophisticated functionalities can be arranged in relation to the selection of advertisements to be delivered. For example, some sort of prioritization can be arranged between different advertisements. For instance, the IPTV server can store, to profiler database for example, the last seen advertisement by the viewer. Thus, next time when advertisements are arranged to be delivered to the same viewer, the IPTV server prioritizes such advertisements, which has not been seen by the viewer yet. Some examples of the invention comprise a solution in which multiple advertisements are connected to each other. For example, there can be a common advertisement for all viewers, who are interested in advertisements belonging to a certain category e.g. a common advertisement relating to a specific car brand. Additionally, there are viewer specific advertisements, which are delivered based on further information in the profiler database - for example based on the sex and age of the viewer, i.e. for men under 45 years, a specific additional advertisement is delivered on sports cars under the same car brand shown earlier as a common advertisement. In such a manner it is possible to get a comprehensive utilization of the viewer profile in the profiler database and the update of the user profile can be based on the user behavior with respect to first advertisement or second advertisement or a combined analysis of the user behavior during the first and second advertisements. Furthermore, the advertisers can make agreements with the IPTV service provider that some advertisement belonging to some category are delivered to viewers desiring to receive such advertisements more often than others. In such a situation there can be prioritization information stored in an IPTV server or even more preferably in the advertisement server.

The method according to the invention comprises a further step of delivering 307 at least an advertisement context being part of an advertisement in addition to an advertisement related data indicating additional information on the advertisement from IPTV server to the outputting device of the viewer. The advertisement to be delivered is the output of the comparison in case of that the comparison indicates matching between the advertisement related data i.e. metadata and the user related data received from the database. As indicated, in response to a positive outcome of the matching at least the advertisement context is delivered. In some embodiment of the invention the whole advertisement i.e. at least the advertisement context and the advertisement related data is delivered. It is also possible to deliver only the advertisement related data if desired.

The delivery 307 is preferably arranged over the same channel over which the program content is delivered to the viewer. The delivery is based on the information stored in the profiler database. For example, the profiler database may comprise a static lP address to be used for delivery. In some other embodiments the delivery address, such as a dynamic lP address of the outputting terminal or a set-top box, is delivered to the IPTV server when the user switch on the outputting system for watching. According to some embodiments of the invention the dynamic delivery address is stored in a user profile in the profiler database.

At least an advertisement context being part of an advertisement in addition to an advertisement related data indicating additional information on the advertisement is represented 309 to the viewer in the next step of the method according to the invention. The representation can be a visual representation or audio representation or audio-visual representation. It can even be a tactile based, e.g. vibration, if the advertiser has selected that as an advertising effect and the outputting device with its peripherals, e.g. remote controller, are capable of deliver such an effect to the user. The advertisement items to be represented can be the advertisement context, the additional data relating to the advertisement and/or both of these according to the invention.

According to the method of the invention the user behavior in response to the representation of at least the advertisement context is monitored and analyzed 311. The result of the monitoring and analysis 311 is further utilized. In the following paragraphs some embodiments of the monitoring and analyzing the user behavior are described.

In some embodiments of the invention an opportunity to give response i.e. feedback on the advertisement delivered to the viewer is offered to the viewer. The two-way communication channel over lP network can be utilized. For example, when the IPTV server starts delivering at least the advertisement context to the viewer, it adds to the advertisement data flow a piece of information which is viewable to the viewer. An example of such a piece of information can be a sentence: 'If you like the advertisement, please press 1. If you don't like it, please press 2." If and when the viewer recognizes the opportunity to give feedback and selects either of the options, for example by pressing a button in the remote controller, the feedback information is delivered back to the IPTV server. According to some embodiment of the invention the IPTV server can analyze the feedback data and deliver the analyzed information to the profiler database. Alternatively, I PTV server can forward the received feedback data directly to the profiler database, which comprises means for analyzing it. The result of the analysis may be utilized at least partly in updating the user preferences stored in the profiler database. Additionally or alternatively, the IPTV service provider can utilize the feedback information with the advertisers by e.g. by configuring the IPTV server to deliver instructions to update advertisement related data in the advertisement server.

Also some other sophisticated feedback mechanism can be implemented. For instance, some automatic feedback mechanism can be established, which monitor viewer behavior with respect to a certain advertisement without any input from the viewer. In some embodiments according to the invention the viewer can e.g. skip an advertisement and the skipping is registered automatically and without any viewer actions and the information on that is delivered to the IPTV server. In some other embodiments it is registered if the viewer starts browsing an Internet site relating to an advertisement shown to the viewer with the outputting device capable of Internet surfing. In some embodiments of the invention it is monitored if a user is passive in giving feedback i.e. not reacting at all and also this information can be utilized in evaluating the matching of a certain advertisement with the viewer's areas of interest. Any of this type of information relating to user behavior is transferred to the lPTV server in some embodiments of the invention. The IPTV server is configured to analyze the piece of information in itself or deliver the piece of information to the profiler database for analysis. After the analysis the viewer data in the profiler database is updated if necessary to implement even more targeted advertising. Additionally or alternatively, the result of analysis in the profiler database can be transmitted to advertisement server for updating the advertisement related data.

In a similar manner the viewer can directly update his/her preferences stored in the profiler database. Advantageously, the profiler database structure is kept simple so that it is easy-to-use even with a simple remote controller of the TV screen or e.g. with a mobile terminal.

According to some further embodiments of the invention the outcome of the monitoring and analysis of user behavior can be utilized within the advertisement related data. Namely, the advertisement related data, i.e. so called metadata, can be updated at least partly in response to the outcome of the monitoring and analysis of the user behavior. For example, if the advertiser has set men under 30 years as a target group for a certain advertisement and by means of monitoring and analysis it is noticed that the dedicated target group e.g. skips the advertisement but some other group, e.g. women over 60, follows the advertisement until the end and are e.g. active in giving feedback, the advertisement related data is updated accordingly. E.g. the IPTV server is configured to recognize the described feedback and it is configured to deliver updating information to the advertisement database. Thus, a certain advertisement is configured to be delivered primarily to some other target group, or to a certain sub-group in a broader group, in the future.

In some embodiments of the invention the registration of viewer behavior is implemented by downloading a registration tool into the set-top box or outputting device. Such registration tool can be e.g. a small widget for registering the user behavior and delivering the information relating to the behavior to the IPTV server. Alternatively, the whole feedback mechanism is implemented in the I PTV server which is capable of recognizing user behavior remotely.

In some other embodiments of the invention the feedback i.e. response mechanism is implemented into a mobile terminal of a user. In such embodiments at least the advertisement context to be delivered into the outputting device is synchronized with feedback communication in the mobile terminal. The IPTV server is configured to comprise information that for a specific user the advertisement is delivered over the IPTV network, but any feedback communication is implemented by utilizing a mobile terminal of a user. The synchronization of the media data delivery over two delivery channels is controlled by IPTV server. It is also possible that an identical information flow is arranged to both the outputting device and a mobile terminal of the viewer. The feedback mechanism can be implemented in the mobile terminal. This is advantageous due to the fact that the mobile terminal offers directly the identification of the user, as already explained, and also a second display and a communication channel over a mobile communication network. A registration and/or feedback tool i.e. widget type application can be implemented to the mobile terminal. A further advantage of this sort of implementation is that no any additional functionalities is required into the set-top box, but merely the mobile terminal is used for controlling and managing the data flow into the set-top box. To make it easy for a viewer to give feedback by means of a mobile terminal for example the touch screen of the mobile terminal can be used. For instance, the advertiser and service provider may develop the feedback mechanism so that there appears virtual buttons, such as 'like' and/or 'skip' on the touch screen and thus it is easy for the user to select the option he/she prefers. According to some embodiments of the invention the feedback mechanism and the options are selectable according to desires from advertisers' side.

In some further embodiments of the invention a connection between a set-top box and a mobile terminal is established. This kind of arrangement provides the opportunity the advertisement data is delivered from IPTV server to set-top box utilizing the IPTV network, but the set-top box is configured to divide the advertisement data to the outputting device and the feedback data to a mobile terminal. In such embodiment the set-top box collects the possible feedback and delivers it back to the IPTV server for further processing. The connection between the set-top box and the mobile terminal can be established by means for wired or wireless connections. An example of wireless connection is a Bluetooth connection.

In general, the result of the monitoring and analysis may cause information which indicates that user related data in the profiler database shall be updated. Alternatively, the outcome of the monitoring and analysis can be that there is no need for update. The decision making with respect to update can be implemented in multiple ways. E.g. if a user skips a certain advertisement for three times, it can be concluded that the user is not interested in that advertisement and it may cause an update to profiler database. The criteria for updating the user related data in the profiler database can be set by the user himself/herself, by the advertiser and / or by the IPTV service provider. It is clear that sophisticated analysis methods can be created for decision making to update of the user profile. Similarly, the result of the monitoring and analysis can be utilized in updating the advertisement related data or in updating both the user related data and the advertisement related data in the respective databases and/or servers.

In a method according to some embodiment of the invention the triggering of the delivery of advertisement is based on multiple criteria. As a first alternative, the two-way communication enables the viewer to select the timing to watch advertisements. Alternatively, some examples of the invention comprises such an arrangement with respect to triggering that the program content data flow includes pointers which indicate the instants for advertisements. The IPTV server is configured to register the pointers and configure to communicate with the profiler database and advertisement servers in such a manner that advertisements can be delivered in timely manner. According to some embodiment of the invention the IPTV server is configured to prepare the advertisement media flow to the viewer, when the viewer starts watching TV. When the pointer is recognized by the IPTV server, it starts delivering advertisements to the end user. The delivery of advertisements is configured to last until e.g. a predetermined time, a predetermined number of advertisements, a predetermined viewer action and/or until a predetermined second pointer indicating the end of advertisements. Also other methods for selecting the triggering the delivery of advertisements can be utilized. For example, delivery based on random timing can be used. Further, the IPTV server needs not necessarily prepare the advertisement beforehand, but may select the advertisements to be shown from the advertisement server according to the method steps discussed above.

The triggering of advertisements can also be based on replacing old advertisements recognized in the stored media to be delivered to the viewer. Such a situation can happen e.g. in video-on-demand (VOD) service or when watching stored content from some service providers. Additionally or alternatively, the delivery of advertisement data can start if the viewer e.g. push a pause button in the outputting device and wants to suspend the program content delivery for any reason.

The advertisement i.e. the advertisement context and/or advertisement related data can be either a still image or a video image. It can even be a sound without any type of image data information or some tactile information, such as vibration. Moreover, the advertisement i.e. the advertisement context and/or advertisement related data can be any combination of the mentioned data types.

In some further embodiments of the invention the advertisement i.e. the advertisement context and/or advertisement related data is configured to the uploaded to a buffer of a set-top box in a background processing manner. This means the during the program data flow the IPTV server selects the advertisements to be delivered to the user on the basis of the information in the profiler database and disclosed earlier and delivers the data to memory or memory buffer of set-top box. By means of such an arrangement the timing of representing of advertisements and the resources of communication channel in use can be optimized. For example, it is advantageous when optimizing resource usage that an advertisement following the profile is uploaded into a set-top box only once and represented multiple times.

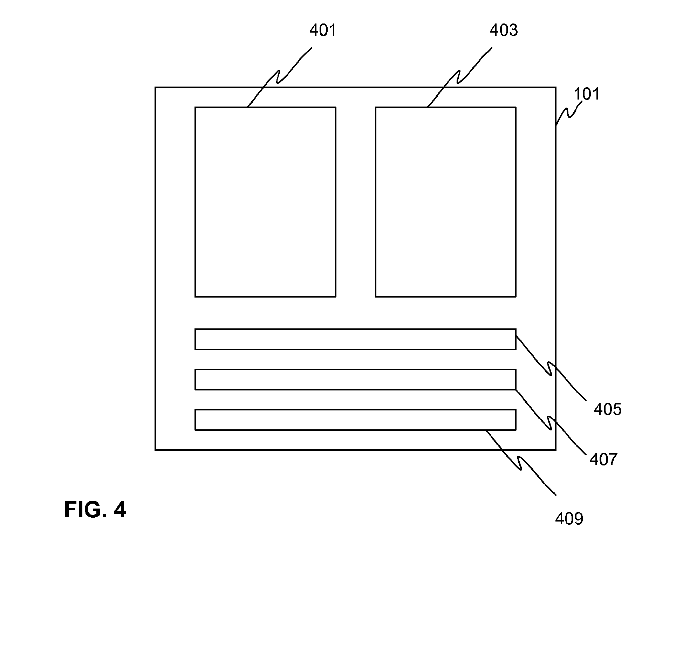

Figure 4 illustrates an IPTV server 101 according to an embodiment of the invention for delivering at least an advertisement context being part of an advertisement in addition to an advertisement related data indicating additional information on the advertisement. The server comprises processing means 401 for implementing instructions according to the current invention. The instructions relate to performing the method according to the invention. The IPTV server according to the invention is configured to recognize a user related identity information in a data flow received from a user end of the two-way digital communication system and inquire a user related data from a profiler database by utilizing the user related identity information. Furthermore, the processing means 401 in IPTV server are configured create instructions for comparing the information from the profiler database with the information received from an advertisement server. In response to the comparison at least an advertisement context is configured to be delivered to the viewer and at least the advertisement context being part of the advertisement in addition to advertisement related data is represented in the user end. The server is configured to monitor and analyze a user behavior in response to a representation of at least the advertisement context. Based on a result of the monitoring and analysis the IPTV server according to some embodiment of the invention is configured to create and deliver instructions to profiler database for updating information therein. According to some further embodiment of the invention the server is configured to create and deliver instructions to advertisement database for updating advertisement related data on the basis of the result of monitoring and analysis of the user behavior.

In some embodiments of the invention the IPTV server is configured to add a feedback request relating to at least the advertisement context to be delivered and the IPTV server comprises means that are configured to analyze the feedback data received from the viewer with respect to the advertisement and/or profiler database. The processing means 401 of IPTV server are further configured to create and deliver instructions to profiler database for updating information therein. The processing means 401 of the IPTV server are also configured to recognize the triggering of the delivery of at least the advertisement context to the viewer.

The IPTV server 101 comprises memory means 403 for storing any data which, when run in the processing means of the IPTV server, is configured to cause the functionality of the IPTV server according to any of the method steps and embodiments described here. Further, the IPTV server according to the invention comprises interfaces 405, 407, 409 for communicating at least with the user end, advertisement server and/or with the profiler database. The interface here shall be understood broadly so that it covers at least all the physical means for arranging the communication either directly or indirectly with the mentioned elements. For example, the interface covers any communicating modems needed for communication. Furthermore, the interface covers any necessary communication protocols to be implemented fully or partly in the I PTV server so that the communication can be established.

Moreover, the invention also relates to a system for delivering at least an advertisement context being part of an advertisement in addition to an advertisement related data indicating additional information on the advertisement. The system comprises at least an outputting device for representing at least the advertisement context. Furthermore, the system comprises an advertisement server for storing advertisement comprising at least the advertisement context and advertisement related data indicating additional information on an advertisement and operating as already disclosed in the context of describing the method according to the invention. The system comprises also a database containing information on the user preferences and a server, which is configured to inquire user preference from the database and compare the advertisement related data with the user related data received from the database and deliver at least the advertisement context to the user if the comparison indicates matching between the advertisement related data and the user related data received from the database and the server is further configured to monitor and analyze the behavior of a user in response to the representation of at least the advertisement context delivered and in response to a result of the monitoring and analysis to update the information on the user preferences in the database.

A computer program product according to the invention for arranging a delivery of at least an advertisement context being part of an advertisement in addition to an advertisement related data indicating additional information on the advertisement in a two-way digital communication system, comprises computer-executable instructions that when executed by processing means of a server, the server is configured to perform the method steps of claims 1-10 and / or any additional method step disclosed in this disclosure.

In the above it is described that information relating to the user recognition is delivered over set-top box, any other channel for delivering the same information to the IPTV server can be utilized. For example, if the set-top box and/or the outputting device and/or remote control of either of those comprise technical means for delivering the said information to the I PTV server, it can be utilized. For instance, if the remote controller of the outputting device is a mobile terminal with wireless communication means and connection, the identity information with respect to the viewer can be delivered directly with the mobile terminal. Naturally, the respective IPTV server may also comprise corresponding communication means for receiving the delivered information. Alternatively, the IPTV server may receive the information through lP network coupled to mobile communication network.

Additionally, even if above it is described the utilization of profiler database in a context of one viewer, the same can be arranged with multiple viewers. For example, there can be a common identifier in the profiler database for a group of people, e.g. family, indicating the advertisement categories which are possible for the whole group. Additionally or alternatively, in case of delivering multiple viewer identifiers to the IPTV server indicating all the viewers of TV at that specific moment, it is possible to arrange some interpretation of the received information in the IPTV server and/or profiler database. For example, the interpretation may comprise a functionality of inquiring information of each respective viewer from a profiler database and analyzing that information. The analysis may comprise e.g. simple Boolean operators to find out, which advertisement categories are common to all of the viewers. Moreover, some further identifiers can be arranged for e.g. indicating a strict prohibition of representing certain advertisements if e.g. children are also watching the delivery. Also more advantageous solutions for analyzing the information can be implemented.

The advertisement related data comprises additional information relating to advertisement. It comprises at least information of the target group of the advertisement to be used in matching advertisement with the information relating to viewers and stored in the profiler database. Additionally, the advertisement related data advantageously comprises further information, e.g. Internet addresses, phone numbers and/or additional information on the products disclosed in the advertisements. The advertisement related data can be merged in the media flow, but especially in the context of a mobile terminal utilized as a feedback channel the advertisement related data can be shown to user as such, for example on the display of the mobile terminal. Moreover, the utilization of the advertisement related data by the viewer and user of a mobile terminal can be monitored, especially if there is a respective application residing in the mobile terminal, and the information on the utilization of the advertismement related data can be taken into account in updating and maintenance of a user profile in the profiler database.

Modern technology enables ever further embodiments of the invention. Namely, so called hybrid set-top boxes, i.e. providing internet connection and comunication within set-top boxes furnished with cable, antenna and/or satellite communication, offer further channels to be utilized in the context of the current invention. The program media flow can e.g. be broadcasted over a traditional channel (cable / antenna / satellite), but advertisements are to be delivered over Internet channel. In some embodiments the profiler database is accessible by some internet advertisement provider and personalized advertisements are selected according to the method of the current invention and delivered over Internet connection. Furthermore, any update into the profiler database in response to monitoring and analysis of user behavior is accomplished by Internet communication.

The invention described here brings many further advantages also from advertiser point of view. Especially by means of the feedback mechanism the advertisers can collect more sophisticated information on consumers and their behavior and habits. One of the main value of the current invention is that the advertisers can personalize their advertisements to a specific target group and even develop the advertisements according to the feedback and experience gain in utilizing the invention described herein.

## Claims

1. A method for delivering at least an advertisement context being part of an advertisement in addition to an advertisement related data indicating additional information on the advertisement in a two-way digital communication system, **characterised in that** the method comprises steps of:
- recognizing a user related identity information in a data flow received from an user end of the two-way digital communication system,
- inquiring a user related data from a database by utilizing the user related identity information,
- comparing the advertisement related data with the user related data received from the database,
- delivering at least the advertisement context to the user if the comparison indicates matching between the advertisement related data and the user related data received from the database,
- representing at least the advertisement context to the user,
- monitoring and analyzing user behavior in response to the representation of at least the advertisement context.

2. A method according to claim 1, **characterised in that** the method further comprises a step of updating the user related data on the basis of a result of the monitoring and analysis of the user behavior in response to the representation of at least the advertisement context.

3. A method according to claim 1 or 2, **characterized in that** the method further comprises a step of updating the advertisement related data on the basis of a result of the monitoring and analysis of user behavior in response to the representation of at least the advertisement context.

4. A method according to any of the claims 1 - 3, **characterized in that** a result of the monitoring and analysis of the user behavior is at least partly based on a response received from the user.

5. A method according to claim 4, **characterized in that** the method further comprises a step of transmitting the response received from the user over one of the following: an Internet network, a mobile communication network.

6. A method according to claim 5, **characterized in that** the response received from the user is inputted over an application implemented in at least one of the following: a remote controller, a mobile terminal, a set-top box.

7. A method according to any of the claims 1 - 6, **characterised in that** the user related identity information received from a user end of the two-way digital communication system is at least one of the following: a user related identity information inputted with a remote controller of an outputting device or set-top box, a user related identity information retrieved from mobile terminal information and delivered over a mobile communication network, an image captured with a camera.

8. A method according to any of the claims 1 - 7, **characterised in that** the user related data in the database contains information on user preferences relating to advertisement category and the delivery of at least the advertisement context to the user is based on a comparison of user preferences relating to advertisement category with a category information in the advertisement related data.

9. A method according to any of the claims 1 - 8, **characterised in that** a triggering of advertisements into a program content data is based on pointers indicating instants for a delivery of advertisements.

10. A method according to any of the claims 1 - 8, **characterised in that** a triggering of advertisements into a program content data is based on a recognition of old advertisement from a media delivered to the user.

11. A server for delivering at least an advertisement context being part of an advertisement in addition to an advertisement related data indicating additional information on the advertisement in a two-way digital communication system, **characterised in that** the server comprises means configured to
- recognize a user related identity information in a data flow received from a user end of the two-way digital communication system,
- inquire user related data from a database by utilizing the user related identity information,
- compare the advertisement related data with the user related data received from the database,
- deliver at least the advertisement context to the user if the comparison indicates matching between the advertisement related data and the user related data received from the database
- monitoring and analyzing user behavior in response to the representation of at least the advertisement context.

12. A server according to claim 11, **characterised in that** the server is further configured to give instruction to update the user related data on the basis of a result of the monitoring and analysis of the user behavior in response to the representation of at least the advertisement context.

13. A server according to claim 11 or 12, **characterised in that** the server is further configured to give instruction to update the advertisement related data on the basis of a result of the monitoring and analysis of the user behavior in response to the representation of at least the advertisement context..

14. A server according to any of the claims 11 - 13, **characterised in that** the server is configured to add a feedback request with respect to at least the advertisement context to be delivered to the user.

15. A system for delivering at least an advertisement context being part of an advertisement in addition to an advertisement related data indicating additional information on the advertisement, the system comprising an outputting device for representing at least the advertisement context,
**characterised in that** the system further comprises
- an advertisement server for storing the advertisement,
- a database containing information on the user preferences,
- a server configured to inquire user preference from the database and compare the advertisement related data with the user related data received from the database and deliver at least advertisement context to the user if the comparison indicates matching between the advertisement related data and the user related data received from the database and the server is further configured to monitor and analyze the behavior of a user in response to the representation of at least the advertisement context delivered and in response to a result of the monitoring and analysis to update the information on the user preferences in the database.

16. A computer program product for delivering at least an advertisement context being part of an advertisement in addition to an advertisement related data indicating additional information on the advertisement in a two-way digital communication system, **characterised in that** the computer program product comprises computer-executable instructions that when executed by processing means of a server, the server is configured to perform all the method steps of claims 1-10.
